# EUROPÄISCHE PATENTSCHRIFT

(11) **EP 0 859 815 B1**
(45) Veröffentlichungstag und Bekanntmachung des Hinweises auf die Patenterteilung: **15.09.1999**
(21) Anmeldenummer: 96938095.5
(22) Anmeldetag: 05.11.1996
(51) Int. Cl.: C09D 5/44

(54) **VERFAHREN ZUR HERSTELLUNG VON WACHSARTIGEN ÜBERZÜGEN AUF ELEKTRISCH LEITFÄHIGEN OBERFLÄCHEN**
PROCESS FOR PRODUCING WAX-LIKE COATINGS ON ELECTRICALLY CONDUCTIVE SURFACES
PROCEDE DE PRODUCTION DE REVETEMENTS CIREUX SUR DES SURFACES ELECTROCONDUCTRICES

(30) Priorität: 10.11.1995 DE 19541907
(43) Veröffentlichungstag der Anmeldung: 26.08.1998
(73) Patentinhaber: Herberts Gesellschaft mit beschränkter Haftung, 42285 Wuppertal (DE)
(72) Erfinder: BÜTTNER, Gabriele, D-40880 Ratingen (DE); KATZMANN, Heinz-Peter, D-42111 Wuppertal (DE); KLEIN, Klausjörg, D-42289 Wuppertal (DE); DAVID, Norbert, D-42579 Heiligenhaus (DE); WENDT, Wolfgang, D-42283 Wuppertal (DE)
(74) Vertreter: Türk, Gille, Hrabal
(86) Internationale Anmeldenummer: EP9604826
(87) Internationale Veröffentlichungsnummer: WO9717407

(56) Entgegenhaltungen:
- EP-A- 0 015 655
- DE-A- 4 132 083
- DATABASE WPI Week 9433 Derwent Publications Ltd., London, GB; AN 267305 XP002026682 & JP 06 196 035 A (FURUKAWA ELECTRIC) , 15.Juli 1994
- PATENT ABSTRACTS OF JAPAN vol. 89, no. 2 & JP 01 298198 A (KANSAI PAINT), 12.Januar 1989,

## Beschreibung

Die Erfindung betrifft ein Verfahren zur Herstellung wachsartiger Überzüge auf elektrisch leitfähigen Substraten, das zur Hohlraumversiegelung von Kraftfahrzeugkarosserien geeignet ist.

Es ist bekannt wachsartige Beschichtungen aus organischer Lösung, wäßriger Dispersion oder als Schmelze auf lackierte oder unlackierte Oberflächen aufzubringen. Als Auftragsarten sind Spritz-, Tauch- und Flutverfahren bekannt. Ein wichtiges Anwendungsfeld ist der Korrosionsschutz von Automobilkarosserien, deren Hohlraumkonservierung mittels Wachs erfolgt. Dies ist notwendig, um bei der Elektrotauchgrundierung nicht oder mit einer Lackschicht von nur unzureichender Dicke versehene Stellen gegen Korrosion zu schützen. Beispielsweise können bei der Elektrotauchgrundierung Teilflächen innerhalb von Hohlräumen vom Umgriff nicht erreicht worden sein oder es können sich während des Eintauchvorgangs Luftblasen innerhalb des Hohlraumes gebildet haben, so daß an solchen Stellen keine Lackabscheidung erfolgen konnte. Um derartige Fehlstellen gegen Korrosion zu schützen, wird das Wachs im Spritz- oder Flutverfahren bevorzugt als heiße Schmelze in die Hohlräume eingebracht und anschließend durch Wärmebehandlung zu einer geschlossenen Wachsoberfläche versintert bzw. geschmolzen (vgl. H. Kittel, Lehrbuch der Lacke und Beschichtungen, Verlag W.A. Colomb, 1977, Band 5, Seite 469 und G. Fettis, Automotive Paints and Coatings, Verlag Chemie Weinheim, 1994, Seite 67-68).

Die vorstehend geschilderten Applikationsverfahren für wachsartige Beschichtungen besitzen eine Reihe von Nachteilen. Es fällt Abfall an, z.B. in Form von Overspray. Die Applikation von Wachs zum Zweck der Hohlraumkonservierung ist im allgemeinen mit manueller Arbeit verbunden. Der Materialverbrauch ist hoch, da innerhalb der Hohlräume in beträchtlichem Ausmaß auch solche Stellen beschichtet werden, die an sich durch eine ordnungsgemäße Elektrotauchgrundierungsschicht ausreichend gegen Korrosion geschützt sind und daher keine zusätzlichen Korrosionsschutzmaßnahmen erfordern.

In der DE-A-42 44 209 und der DE-A-41 32 083 werden Verfahren zur Beschichtung elektrisch leitfähiger Substrate beschrieben. Beiden Verfahren ist gemeinsam, daß die abscheidbare Beschichtungszusammensetzung aus einem Lackbindemittel besteht und nur geringe Mengen an Wachs als Additive enthält. Es handelt sich um übliche Überzugsmittel die gehärtet werden und dann nicht mehr schmelzbar und nicht thermoplastisch sind. In der DE-A-42 44 209 werden sie zur Lackierung von Massengütern, mit dem Ziel verbesserter Eigenschaften im Hinblick auf die Ausbildung von Läufermarkierungen, Wassertropfenempfindlichkeit und Brückenbildung eingesetzt. In der DE-A-41 32 083 dienen sie zur Metallbehälterinnenlackierung mit einem Lack, der als Naßfilm spülunempfindlich ist und gutes Porigkeitsverhalten und Füllgutbeständigkeit aufweist.

Aufgabe der vorliegenden Erfindung ist es, ein rationelles und umweltfreundliches Verfahren zur Hohlraumversiegelung von Kraftfahrzeugkarosserien durch Auftrag von wachsartigen, schmelzbaren und/oder thermoplastischen Schutzüberzügen bereitzustellen. Das zu findende Verfahren soll insbesondere manuelle Arbeit vermeiden und mit geringem Materialverbrauch und möglichst frei von Abfällen durchführbar sein.

Diese Aufgabe wird gelöst durch ein Verfahren, das gekennzeichnet ist durch Elektroabscheidung aus einer ionisch stabilisierten wäßrigen Dispersion von Wachs und/oder wachsartigen Zubereitungen auf einem in die Dispersion eingetauchten, elektrisch leitfähigen Substrat, wobei man den erhaltenen Überzug nach dem Austauchen und gegebenenfalls Spülen zur Bildung einer geschlossenen Oberfläche durch Erwärmen versintert oder schmilzt, wobei die wäßrige Dispersion zu 5 bis 30 Gew.-% aus einer Zusammensetzung besteht, die aus 0 bis 50 Gew.-% eines oder mehrerer Pigmente und/oder Füllstoffe und 50 bis 100 Gew.-% Wachs und/oder wachsartiger Zubereitung besteht, wobei die wachsartige Zubereitung bezogen auf ihr Gewicht 0 bis 10 Gew.-% eines oder mehrerer für organische Überzugsmittel üblicher Additive und/oder eines oder mehrerer ionischer Emulgatoren enthält.

Durch das erfindungsgemäße Verfahren entsteht eine Überzugsschicht aus Wachs und/oder wachsartigen Zubereitungen. Die erhaltene Überzugsschicht ist schmelzbar und/oder thermoplastisch.

Nach der Elektroabscheidung kann das elektrisch leitfähige Substrat aus der Dispersion ausgetaucht werden. Es kann gegebenenfalls ein Abspülen mit Wasser oder einem wäßrigen Medium erfolgen. Das ausgetauchte und gegebenenfalls abgespülte mit der Überzugsschicht versehene Substrat wird erwärmt, um die Überzugsschicht durch Versintern oder Schmelzen in eine geschlossene Oberfläche überzuführen, worauf unter den Schmelzpunkt der im allgemeinen thermoplastischen Überzugsschicht abgekühlt werden kann.

Zur Abkürzung werden im folgenden Wachse und wachsartige Zubereitungen als "Wachs" bezeichnet.

Die ionisch stabilisierten wäßrigen Dispersionen enthalten als dispergierte Phase Wachs. Es handelt sich dabei insbesondere um Stoffe, die keiner Selbstvernetzung und bevorzugt auch keiner Fremdvernetzung unterliegen. Sie werden bevorzugt frei von Vernetzersubstanzen eingesetzt. Es handelt sich im allgemeinen um thermoplastische Stoffe.

Als Wachs können alle bekannten synthetischen oder in der belebten oder unbelebten Natur vorkommenden Wachse dienen, soweit die Wachse wasserunlöslich sind. Dabei ist unter Wachs der übliche technologische Begriff eines Stoffes mit folgenden Eigenschaften zu verstehen: Bei 20°C knetbar, fest bis brüchig hart; grob bis feinkristallin, durchscheinend bis opak, jedoch nicht glasartig; über 40°C ohne Zersetzung schmelzend; schon wenig oberhalb des Schmelzpunktes verhältnismäßig niedrigviskos; stark temperaturabhängig in Konsistenz und Löslichkeit; unter leichtem Druck polierbar (siehe z.B. Ullmanns Enzyklopädie der technischen Chemie, 4. Auflage, 1983, Band 24, Seite 3). Wachse natürlichen Ursprungs können eine Veredelung erfahren haben. Die Wachse können in ionische Gruppen überführbare Gruppen enthalten, beispielsweise Carboxylgruppen. Beispiele für im erfindungsgemäßen Verfahren einsetzbare natürliche Wachse sind pflanzliche Wachse, wie Carnaubawachs und Montanwachs, tierische Wachse, wie Bienenwachs, Wollwachs, Mineralwachse, wie Ceresin und Ozokerit, sowie petrochemische Wachse, wie Paraffinwachs. Beispiele für chemisch modifizierte Wachse sind Montanesterwachse. Beispiele für synthetische Wachse sind Polyethylenwachs, Silikonwachs und Fluor enthaltende synthetische Wachse. Weitere Beispiele für Wachse sind auch gesättigte Fettsäuren von wachsartiger Konsistenz wie z.B. Stearinsäure. Wasserlösliche Wachse, beispielsweise auf Polyglykolbasis sind für das erfindungsgemäße Verfahren ungeeignet. Bevorzugt sind Wachse mit einem Schmelzpunkt oberhalb von 50°C, z.B. bis 140°C, beispielsweise zwischen 60 und 140°C, besonders bevorzugt zwischen 70 und 90°C. Es können ein oder mehrere Wachse im Gemisch verwendet werden. Bevorzugt werden solche Wachse eingesetzt, die Verwendung finden bei der eingangs geschilderten Hohlraumversiegelung oder bei der Endkonservierung fertig lackierter Automobilkarosserien und den dafür geltenden Spezifikationen der Automobilhersteller entsprechen.

Als Wachs können auch sogenannte wachsartige Zubereitungen dienen, die als Hauptkomponente Wachs und daneben Additive und/oder ionische Emulgatoren in einem Mengenanteil von 0 bis 10 Gew.-% enthalten. Die Additive sind in einem Mengenanteil von 0 bis 10 Gew.-%, z.B. 0,1 bis 10 Gew.-% bezogen auf Wachs enthalten. Additive sind sämtliche übliche, für organische Überzugsmittel verwendeten Additive, beispielsweise übliche Korrosionsinhibitoren, wie z.B. Strontiumchromat, rheologiesteuernde Mittel, schmelzpunkterniedrigende Mittel, z.B. Kohlenwasserstoffe, wie Petroleum, Weichmacher und nicht-ionische Emulgatoren. Die wachsartigen Zubereitungen können 0 bis 10 Gew.-%, z.B. 1 bis 10 Gew.-% bezogen auf das Wachs, eines oder mehrerer ionischer Emulgatoren enthalten. Außer Additiven und/oder Emulgatoren können die Wachs enthaltenden Dispersionen auch Pigmente und/oder Füllstoffe in einem Mengenanteil von 0 bis 50 Gew.-% enthalten, bevorzugt unter 30 Gew.-%, besonders bevorzugt unter 15 Gew.-%, jeweils bezogen auf den nicht-wäßrigen Anteil der Dispersion, wobei die Untergrenze beispielsweise bei 5 Gew.-% liegt. Beispiele für Pigmente und/oder Füllstoffe sind anorganische und organische Materialien wie Ruß, Kaolin, Talkum, Glimmer, Siliziumdioxid. Bevorzugt sind die Dispersionen frei von Pigmenten und/oder Füllstoffen.

Bei den ionisch stabilisierten wäßrigen Dispersionen von Wachs kann es sich um selbstdispergierte oder um fremddispergierte Dispersionen handeln.

Die selbstdispergierten Dipersionen können beispielsweise hergestellt werden durch Neutralisation entsprechender in ionische Gruppen überführbarer Gruppen des zu dispergierenden Wachses. Im allgemeinen handelt es sich dabei um in anionische Gruppen überführbare Gruppen wie z.B. Carboxylgruppen. Im allgemeinen wird das Wachs in Wasser bei erhöhter Temperatur, im allgemeinen oberhalb seines Schmelzpunktes, beispielsweise bei 60 bis 130°C, und gegebenenfalls unter Druck, beispielsweise bei bis zu 10 bar, dispergiert unter Zusatz eines oder mehrerer Neutralisationsmittel und anschließendes Abkühlen der so erhaltenen Dispersion unter den Schmelzpunkt der dispergierten Phase. Dabei kann der Zusatz des Neutralisationsmittels zum Wachs und/oder zum Wasser vor oder während des Dispergierens erfolgen. Beispiele für Neutralisationsmittel für Carboxylgruppen sind anorganische oder organische Basen, wie z.B. Natriumhydroxid, Ammoniak, Amine oder Aminoalkohole.

Die im erfindungsgemäßen Verfahren bevorzugt eingesetzten fremddispergierten Dispersionen von Wachs können beispielsweise hergestellt werden durch Dispergieren des Wachses in Wasser unter Zusatz eines oder mehrerer externer ionischer Emulgatoren bei erhöhter Temperatur, im allgemeinen oberhalb des Schmelzpunktes des Wachses, beispielsweise bei 60 bis 130°C, und gegebenenfalls unter Druck, beispielsweise bei bis zu 10 bar, und anschließendes Abkühlen der erhaltenen Dispersionen unter den Schmelzpunkt der dispergierten Phase. Dabei kann der Zusatz der ionischen Emulgatoren zum Wachs und/oder zum Wasser erfolgen. Beispiele für ionische Emulgatoren sind kationische oder anionische Emulgatoren. Bei den ionischen Emulgatoren kann es sich auch um lackübliche, ionische Bindemittel handeln. Sie werden in Mengenanteilen von 0 bis 10 Gew.-%, z.B. 1 bis 10 Gew.-% bezogen auf zu dispergierendes Wachs eingesetzt. Beispiele für verwendbare kationische Emulgatoren sind handelsübliche Emulgatoren wie Aminsalze. Sie können als Carboxylate, wie z.B. als Acetate oder Oleate oder bevorzugt in Form ihrer anorganischen Salze, wie z.B. als Chloride oder Sulfate vorliegen und sie können sich von primären, sekundären, tertiären Aminen ableiten oder beispielsweise auch als quarternäre Ammoniumsalze vorliegen. Diese kationischen Emulgatoren können an der NH-Gruppe-sofern im Molekül vorhanden - alkoxyliert, bevorzugt ethoxyliert und/oder propoxyliert sein. Beispiele für die verwendbaren Aminsalze sind Stearylammoniumchlorid, Oleylammoniumchlorid, Benzyltriethylammoniumchlorid, Distearyldimethylammoniumchlorid, Benzylstearyldimethylammoniumchlorid. Es können jedoch auch kationische Gruppen enthaltende wasserverdünnbare Bindemittel, bevorzugt in kathodisch abscheidbaren Tauchlacken (KTL) einsetzbare Bindemittel oder bevorzugt KTL-Pastenharze als kationische polymere Emulgatoren eingesetzt werden. Solche Bindemittel und Pastenharze werden ausschließlich als Emulgatoren eingesetzt. Beispiele dafür sind Aminoepoxidharze oder Amino(meth)acrylatharze mit Molmassen bevorzugt zwischen 500 und 3000. Beispiele für in kathodisch abscheidbaren Tauchlacken einsetzbare Pastenharze sind z.B. in den EP-A-0 183 025 und EP-A-0 469 497 beschrieben. Bevorzugt jedoch werden anionische Emulgatoren eingesetzt. Beispiele für verwendbare anionische Emulgatoren sind handelsübliche Emulgatoren wie Alkyl- oder Aralkylsulfate, Alkyl- oder Aralkylsulfonate, Alkyl- oder Aralkylphosphate, Alkyl- ooder Aralkylcarboxylate. Sie liegen bevorzugt als Kalium-, Natrium- oder anorganisches oder organisches Ammoniumsalz vor. Beispiele sind Natriumlaurylsulfat und -sulfonat, Ammoniumdodecylbenzolsulfat und -sulfonat. Die anionischen Emulgatoren können auch alkoxyliert, bevorzugt ethoxyliert und/oder propoxyliert sein. Es können jedoch auch anionische Gruppen enthaltende wasserverdünnbare Bindemittel, bevorzugt in anodisch abscheidbaren Tauchlacken (ATL) einsetzbare Bindemittel oder bevorzugt ATL-Pastenharze als anionische polymere Emulgatoren eingesetzt werden. Solche Bindemittel und Pastenharze werden ausschließlich als Emulgatoren eingesetzt.

Die im erfindungsgemäßen Verfahren eingesetzten Dispersionen werden erzeugt durch intensives Vermischen des das geschmolzene Wachs enthaltenden zu dispergierenden Materials mit Wasser. Geeignete Einrichtungen dafür sind Mischaggregate wie z.B. Flügelrührer, mit Zahnscheiben versehene Rührer, statische Mischer, Rotor-Stator-Mischer, Ultraschallhomogenisatoren oder Hochdruckhomogenisatoren.

Die im erfindungsgemäßen Verfahren eingesetzten wäßrigen Dispersionen enthalten zwischen 5 und 30, bevorzugt unter 20 Gew.-% der erfindungsgemäß eingesetzten Zusammensetzungen aus Pigmenten und/oder Füllstoffen und/oder Wachs und/oder wachsartiger Zubereitung. Die Teilchengröße der dispergierten Phase liegt bevorzugt zwischen 100 und 500 nm.

Das erfindungsgemäße Verfahren wird im Prinzip analog der dem Fachmann bekannten Elektrotauchlackierung (ETL, vgl. z.B. Glasurit-Handbuch Lacke und Farben, Curt R. Vincentz Verlag, Hannover 1984, Seite 374-382) durchgeführt, d.h. die ionisch stabilisierte Dispersion kann praktisch wie ein elektrophoretisch abscheidbarer Tauchlack gehandhabt werden, d.h. die ionisch stabilisierten Dispersionsteilchen können auf der Oberfläche eines elektrisch leitfähigen Substrats durch Anlegen eines Gleichstromes elektrokoaguliert werden. Die ionisch stabilisierte, Wachs enthaltende Dispersion kann in eine ET-Installation, beispielsweise mit den üblichen Hilfsaggregaten (Gegenelektroden, Ultrafiltrationskreislauf, Elektrodialysekreislauf, Spülzone etc.) versehenes Elektrotauchlackbecken eingefüllt werden, das zu beschichtende Substrat wird eingetaucht und im Falle kationisch stabilisierter Dispersionen als Kathode, im Falle der bevorzugten anionisch stabilisierten Dispersionen als Anode geschaltet. Über die Spannung, im allgemeinen zwischen 50 und 1000 V, bevorzugt zwischen 100 und 500 V, und die Dauer des Stromflusses (Beschichtungsdauer), beispielsweise zwischen 0,5 und 5 Minuten kann die Schichtdicke des Wachsüberzuges in weiten Grenzen gesteuert werden. Beispielsweise lassen sich Schichtdicken zwischen 2 und 100 µm, bevorzugt zwischen 5 und 50 µm einstellen. Mit dem Begriff der Schichtdicke ist die sich nach dem Versintern oder Schmelzen ergebende Trockenschichtdicke des Wachsüberzuges gemeint. Die Temperatur der Dispersion wird während der Elektroabscheidung unterhalb des Schmelzpunktes der dispergierten Phase gehalten, im allgemeinen beispielsweise bei 20 bis 40°C. Nach der Elektroabscheidung wird das beschichtete Substrat ausgetaucht und gegebenenfalls abgespült, z.B. mit vollentsalztem Wasser oder bevorzugt mit Ultrafiltrat, sofern ein Ultrafiltrationskreislauf betrieben wird. Die Spülflüssigkeit kann dem ET-Becken bevorzugt wieder zugeführt werden. Nach gegebenenfalls kurzem Trocknen bei Umgebungstemperatur wird der Wachsüberzug zu einer geschlossenen, porenfreien und wasserabweisenden Oberfläche versintert oder geschmolzen. Dies geschieht durch kurzzeitiges Behandeln bei erhöhter Temperatur, bevorzugt knapp über dem Schmelzpunkt des Überzuges, beispielsweise bei 60 bis 100°C, z.B. während fünf bis zwanzig Minuten. Dabei kann die Wärmezufuhr beispielsweise durch Warmluft und/oder IR-Bestrahlung erfolgen.

Die ionisch stabilisierte Wachsdispersion verarmt während des Beschichtungsvorgangs infolge Elektroabscheidung an dispergierter Phase. Dies kann, wie auch bei der Elektrotauchlackierung üblich, ausgeglichen werden durch Nachfüllen mit einer höher konzentrierten Dispersion und/oder Entzug von Ultrafiltrat oder durch Zusatz von zu dispergierendem, Wachs enthaltenden Material, beispielsweise durch Vermischen eines Teils der an Festkörper verarmten Dispersion mit Wachs unter den vorstehend erläuterten Bedingungen. Dabei wird eine höher konzentrierte Dispersion erzeugt, die der Hauptmenge der an Festkörper verarmten Dispersion im benötigten Verhältnis zugegeben werden kann. Sich möglicherweise während des ET-Betriebs anreichernder Emulgator kann durch Ultrafiltration entzogen werden, so daß das Ultrafiltrat für die Herstellung der ionisch stabilisierten Dispersionen eingesetzt werden kann. Im allgemeinen ist es zweckmäßig auch einen Elektrodialysekreislauf zu betreiben, in dem nicht abgeschiedenes Neutralisationsmittel oder in der Dispersion während der Elektroabscheidung angereicherte Gegenionen des bevorzugt verwendeten ionischen Emulgators aus der Dispersion entfernt werden. Das gewonnene Elektrodialysat kann bei der Herstellung der Dispersionen oder bei der Konditionierung des Nachfüllmaterials verwendet werden.

Beim erfindungsgemäßen Verfahren eignen sich als Substrate alle elektrisch leitfähigen Substrate, beispielsweise Metalle, elektrisch leitfähige Kunststoffe oder mit einer elektrisch leitfähigen Schicht versehene Substrate.

Bevorzugt wird das erfindungsgemäße Verfahren eingesetzt zur Hohlraumversiegelung, insbesondere von Neuwagenkarosserien, die im allgemeinen mit einer Mehrschichtlackierung aus Elektrotauchlackgrundierung und weiteren in der Automobillackierung für Sichtflächen üblichen Überzugsschichten versehen sind, beispielsweise bestehend aus einer Füllerschicht und einer ein- oder zweischichtigen farb- und/oder effektgebenden Decklackschicht. Die an sich fertig lackierte Karosse wird in die ionisch stabilisierte Dispersion eingetaucht, durch elektrischen Kontakt an einer geeigneten Stelle als Gleichstromelektrode geschaltet und in der vorstehend beschriebenen Weise dem elektrophoretischen Beschichtungsvorgang unterworfen. Bevorzugt erfolgt das Eintauchen der Karosse unter einem Eintauchwinkel, der von dem bei der Aufbringung der Elektrotauchgrundierung auf die Karosse gewählten Eintauchwinkel abweicht. Eine Elektroabscheidung von Wachs enthaltenden Dispersionsteilchen findet nur an den metallischen, elektrisch leitfähigen Fehlstellen statt.

Gemäß einer weiteren bevorzugten Ausführungsform des erfindungsgemäßen Verfahrens wird der wachsartige Überzug auf einem Substrat abgeschieden, das ganz oder teilweise mit einer elektrophoretisch aufgetragenen elektrisch leitfähigen Grundierung versehen ist. Diese Verfahrensvariante erfolgt bevorzugt bei der Hohlraumkonservierung solcher Neuwagenkarosserien, die mit einer Mehrschichtlackierung aus zweischichtiger Elektrotauchlackierung und weiteren in der Automobilserienlackierung für Sichtflächen üblichen Überzugsschichten versehen sind, wie beispielsweise eine Klarlack- oder eine ein- oder zweischichtige farb- und/oder effektgebende Decklackschicht. Eine Zweischicht-Elektrotauchlackierung besteht aus einer elektrophoretisch aufgebrachten Grundierung, die nach dem Einbrennen eine ausreichende elektrische Leitfähigkeit besitzt, um darauf anschließend eine übliche nach dem Einbrennen elektrisch isolierende gegebenenfalls farbige Elektrotauchlackschicht abzuscheiden. Die elektrisch leitfähige Elektrotauchgrundierungsschicht kann im Vergleich mit elektrisch isolierenden Elektrotauchlackierungen eine geringere Korrosionsschutzwirkung aufweisen. Das Elektrotauchlack-Überzugsmittel für die Erzeugung der ersten elektrisch leitfähigen Überzugsschicht enthält elektrische Leitfähigkeit vermittelnde Bestandteile. Sie sollen der ersten Überzugsschicht im eingebrannten Zustand einen zur elektrophoretischen Abscheidung einer weiteren Überzugsschicht aus dem zweiten elektrophoretisch abscheidbaren Überzugsmittel ausreichend niedrigen spezifischen Widerstand, beispielsweise zwischen 10³ und 10⁸ Ohm.cm verleihen. Beispiele für derartige Bestandteile sind teilchenförmige anorganische oder organische elektrische Leiter oder Halbleiter, wie beispielsweise Eisenoxidschwarz, Graphit, Leitfähigkeitsruß, Metallpulver, z.B. aus Aluminium, Kupfer oder Edelstahl, Molybdändisulfid oder auch Polymere mit elektrischer Leitfähigkeit, wie z.B. bevorzugt Polyanilin. Beispiele für derartige Bestandteile enthaltende Elektrotauchlacke findet man in US-A-3 674 671, GB-A-2 129 807, EP-A-0 409 821 und EP-A-0 426 327. Die Bedingungen für die Aufbringung der zweiten Elektrotauchlackschicht können bewußt so gewählt werden, daß Karosseriehohlräume nicht oder nur unvollständig beschichtet werden. Beispielsweise wird so gearbeitet, daß im wesentlichen nur die Sichtflächen der Karosserie mit der zweiten Elektrotauchlackschicht überzogen werden. Die Durchführung des erfindungsgemäßen Verfahrens an sich unterscheidet sich nicht vom vorstehend gesagten. Die Elektroabscheidung von Wachs enthaltenden Dispersionsteilchen findet statt auf freiliegenden Stellen der ersten elektrisch leitfähigen Elektrotauchgrundierungsschicht sowie an gegebenenfalls vorhandenen metallischen, elektrisch leitfähigen Fehlstellen.

Die Neuwagenkarosserien erhalten nach dem erfindungsgemäßen Verfahren eine Hohlraumkonservierung. Erst nach Austauchen können sie mit Wasser oder Ultrafiltrat abgespült werden, wie vorstehend beschrieben. Bei Verwendung ionisch stabilisierter, pigment- und füllstofffreier Wachsdispersionen bietet das erfindungsgemäße Verfahren durch Verzicht auf eine Spülung nach dem Austauchen die Möglichkeit, daß die Neuwagenkarosse auch äußerlich einen dünnen Wachsüberzug erhält. Dieser bildet sich nach Antrocknen der Wachsdispersion und Versinterung. Dieser äußerliche Wachsüberzug ist unter 2 µm dick und kann als später leicht wieder, beispielsweise durch Polieren entfernbarer Montage- und Transportschutz dienen. Hohlraumkonservierung und Montageschutz aus Wachs können nach dem erfindungsgemäßen Verfahren in den für sie jeweils typischen Schichtdicken rationell in einem gemeinsamen Arbeitsschritt aufgetragen werden.

Das erfindungsgemäße Verfahren erlaubt die Aufbringung von Wachs enthaltenden Überzügen unter Vermeidung manueller Arbeit. Das erfindungsgemäße Verfahren arbeitet materialsparend, da die Schichtdicke der Überzüge gesteuert werden kann und eine Ausbildung der Überzüge automatisch nur an den gewünschten Stellen erfolgt. Entsorgungsprobleme werden weitgehend vermieden.

### Beispiel

100 g Wachs (Luwax LGE^{R} der Firma BASF) werden in 900 ml deionisiertem Wasser bei 90°C aufgeschmolzen und unter Zusatz von 4 g Diisopropanolamin unter intensivem Rühren dispergiert. Unter fortgesetztem Rühren wird auf Raumtemperatur abgekühlt. Ein zinkphosphatiertes Stahlblech wird in die erhaltene, auf 25°C temperierte Wachsdispersion eingetaucht und als Anode geschaltet. Auf der Oberfläche scheidet sich eine Wachsschicht ab, deren Trockenschichtdicke abhängig ist von der Dauer des Stromflusses (Beschichtungsdauer) und der Höhe der Gleichspannung (siehe Tabelle 1). Nach Abschaltung des Gleichstroms wird das Stahlblech ausgetaucht und 15 min. bei 90°C erhitzt unter Versinterung der Wachsschicht.

**Tabelle 1**

| Beschichtungsdauer Sekuden (S) | Trockenschichtdicke nach dem Versintern bei einer Gleichspannung von | |
|---|---|---|
| | 80 V | 100 V |
| 30 | 2 µm | 3 µm |
| 60 | 4 µm | 5 µm |
| 120 | 7 µm | 11 µm |

## Patentansprüche

1. Verfahren zur Hohlraumversiegelung von Kraftfahrzeugkarosserien durch Auftrag von wachsartigen, schmelzbaren und/oder thermoplastischen Schutzüberzügen, gekennzeichnet durch Elektroabscheidung aus einer ionisch stabilisierten wäßrigen Dispersion von Wachs und/oder wachsartigen Zubereitungen auf einem in die Dispersion eingetauchten, elektrisch leitfähigen Substrat, wobei man den erhaltenen Überzug nach dem Austauchen und gegebenenfalls Spülen zur Bildung einer geschlossenen Oberfläche durch Erwärmen versintert oder schmilzt, wobei die wäßrige Dispersion zu 5 bis 30 Gew.-% aus einer Zusammensetzung besteht, die aus
0 bis 50 Gew.-% eines oder mehrerer Pigmente und/oder Füllstoffe und
50 bis 100 Gew.-% Wachs und/oder wachsartiger Zubereitung besteht, wobei die wachsartige Zubereitung bezogen auf ihr Gewicht
0 bis 10 Gew.-% eines oder mehrere für organische Überzugsmittel übliche Additive und/oder eines oder mehrerer ionischer Emulgatoren enthält.

2. Verfahren nach Anspruch 1, dadurch gekennzeichnet, daß man als Wachse natürliche oder synthetische wasserunlösliche Wachse und/oder Fettsäuren wachsartiger Konsistenz einsetzt.

3. Verfahren nach einem der vorhergehenden Ansprüche, dadurch gekennzeichnet, daß man selbstdispergierende Wachse und/oder wachsartige Zubereitungen mit ionischen Gruppen verwendet.

4. Verfahren nach einem der Ansprüche 1 bis 2, dadurch gekennzeichnet, daß man wäßrige Dispersionen verwendet, in denen die Wachse und/oder wachsartigen Zubereitungen durch Zusatz von ionischen Emulgatoren dispergiert sind.

5. Verfahren nach Anspruch 4, dadurch gekennzeichnet, daß man anionische Emulgatoren verwendet.

6. Verfahren nach einem der Ansprüche 1, 2, 4 und 6, dadurch gekennzeichnet, daß man lackübliche ionische Bindemittel als ionische Emulgatoren verwendet.

7. Verfahren nach einem der vorhergehenden Ansprüche, dadurch gekennzeichnet, daß es mit einem Substrat durchgeführt wird, das ganz oder teilweise mit einer elektrophoretisch abgeschiedenen, elektrisch leitfähigen Grundierungsschicht versehen ist.

8. Verfahren nach einem der vorhergehenden Ansprüche, dadurch gekennzeichnet, daß es gleichzeitig zur Lackkonservierung von Kraftfahrzeugkarosserien durchgeführt wird, wobei nach dem Austauchen aus der Dispersion ohne Zwischenspülung angetrocknet und der erhaltene Überzug durch Erwärmen versintert oder verschmolzen wird, wobei ionisch stabilisierte, pigment- und füllstofffreie Wachsdispersionen eingesetzt werden.

## Claims

1. Process for sealing cavities in motor vehicle bodies by application of wax-like, meltable and/or thermoplastic protective coatings, characterised by electrodeposition from an ionically stabilised aqueous dispersion of wax and/or wax-like preparations onto an electrically conductive substrate dipped into the dispersion, wherein the coating obtained, after the removal and optional rinsing, is sintered or melted by heating in order to form a closed surface, the aqueous dispersion consisting to the extent of 5 to 30 wt.% of a composition which consists of
0 to 50 wt.% of one or more pigments and/or fillers and
50 to 100 wt.% wax and/or a wax-like preparation, the wax-like preparation containing, based on its weight,
0 to 10 wt.% of one or more of the conventional additives for organic coatings and/or one or more ionic emulsifiers.

2. Process according to claim 1, characterised in that the waxes used are natural or synthetic waterinsoluble waxes and/or fatty acids of a wax-like consistency.

3. Process according to one of the preceding claims, characterised in that self-dispersing waxes and/or wax-like preparations containing ionic groups are used.

4. Process according to either of claims 1 or 2, characterised in that aqueous dispersions in which the waxes and/or wax-like preparations are dispersed by the addition of ionic emulsifiers are used.

5. Process according to claim 4, characterised in that anionic emulsifiers are used.

6. Process according to one of claims 1, 2, 4 and 5, characterised in that the ionic emulsifiers used are conventional ionic binders for lacquers.

7. Process according to one of the preceding claims, characterised in that it is carried out using a substrate which is entirely or partially covered with an electrophoretically deposited, electrically conductive priming layer.

8. Process according to one of the preceding claims, characterised in that it is carried out in order at the same time to preserve the lacquer on motor vehicle bodies, and that drying is carried out, without intermediate rinsing, after the removal from the dispersion and the coating obtained is sintered or melted by heating, with ionically stabilised, pigment-free and filler-free wax dispersions being used.

## Revendications

1. Procédé de colmatage des cavités dans les carrosseries automobiles par l'application de revêtements de protection cireux, fusibles et/ou thermoplastiques, caractérisé par une électrodéposition dans un milieu de dispersion aqueux, stabilisé sur le plan ionique, formé par une cire et/ou des préparations cireuses, sur un substrat électroconducteur immergé dans le milieu de dispersion, dans lequel procédé le revêtement obtenu est soumis, à la sortie du bain et, le cas échéant, après lavage, à un processus de frittage ou de vitrification par un apport de chaleur pour former une surface fermée, le milieu de dispersion aqueux contenant entre 5 et 30 % en poids d'un composé formé par 0 à 50 % en poids d'un ou plusieurs pigments et/ou produits de coupage et 50 à 100 % en poids de cire et/ou préparation cireuse, la préparation cireuse contenant par rapport à son poids entre 0 et 10 % en poids d'un ou plusieurs additifs habituels pour des agents de revêtement organiques et/ou un ou plusieurs agents émulsionnants ioniques.

2. Procédé selon la revendication 1, caractérisé en ce que les cires utilisées sont des cires naturelles ou synthétiques non solubles dans l'eau et/ou des acides gras à consistance analogue à la cire.

3. Procédé selon l'une quelconque des revendications précédentes, caractérisé en ce que l'on utilise des cires auto-dispersives et/ou des préparations cireuses contenant des groupes ioniques.

4. Procédé selon l'une quelconque des revendications 1 à 2, caractérisé en ce que l'on utilise des milieux de dispersion aqueux, dans lesquels les cires et/ou les préparations cireuses ont été dispersées par l'addition d'agents émulsionnants ioniques.

5. Procédé selon la revendication 4, caractérisé en ce que l'on utilise des agents émulsionnants anioniques.

6. Procédé selon les revendications 1, 2, 4 et 5, caractérisé en ce que les agents émulsionnants ioniques utilisés sont des liants ioniques utilisés généralement dans les vernis.

7. Procédé selon l'une quelconque des revendications précédentes, caractérisé en ce que ledit procédé est exécuté avec un substrat qui est revêtu en totalité ou en partie d'une couche de fond électroconductrice, déposée par électrophorèse.

8. Procédé selon l'une quelconque des revendications précédentes, caractérisé en ce que ledit procédé est effectué en même temps pour la préservation des vernis des carrosseries automobiles, dans lequel procédé, à la sortie du bain constitué par un milieu de dispersion, on effectue un séchage sans lavage intermédiaire et le revêtement obtenu est soumis à un processus de frittage ou de vitrification par un apport de chaleur, sachant que l'on utilise des milieux de dispersion cireux stabilisés sur le plan ionique, sans pigments ou produits de coupage.
